# EUROPÄISCHE PATENTANMELDUNG

(11) **EP 2 732 903 A2**
(43) Veröffentlichungstag der Anmeldung: **21.05.2014**
(21) Anmeldenummer: 13192370.8
(22) Anmeldetag: 11.11.2013
(51) Int. Cl.: B23K 11/00, B23K 11/30

(54) **Vorrichtung zum Verschweißen elektrischer Leiter**

(30) Priorität: 16.11.2012 DE 102012111074; 08.05.2013 DE 102013104802
(71) Anmelder: KombiTec GmbH, 87488 Betzigau (DE)
(72) Erfinder: Weißenbach, Edgar, 87527 Sonthofen (DE); Müller, Fabian, 87435 Kempten (DE)
(74) Vertreter: Baumann, Rüdiger Walter

(57) **Zusammenfassung**

Die Erfindung betrifft eine Vorrichtung zum Kompaktieren und Verbinden elektrischer Leiter. Die Vorrichtung weist eine Oberelektrode und eine Unterelektrode auf, die sich gegenüberliegen und entlang einer Bewegungsrichtung relativ zu und voneinander weg bewegbar sind. Die Ober- bzw. Unterelektrode weist je mindestens eine Elektrode auf. Die Elektroden begrenzen einen Raum zur Aufnahme der zu kompaktierenden und zu verbindenden Leiter. Zwischen der mindestens einen Elektrode der Oberelektrode und der mindestens einen Elektrode der Unterelektrode ist ein Bewegungsspalt mit einer Spaltlängserstreckung vorgesehen, und die Spaltlängserstreckung und die Raumlängsachse schließen einen spitzen, rechtwinkligen oder stumpfen Winkel ein.

## Beschreibung

Die vorliegende Erfindung betrifft eine Vorrichtung zum Verbinden elektrischer Leiter, insbesondere von Litzen oder dergleichen. Hierzu weist die Vorrichtung eine Oberelektrode und eine Unterelektrode auf, die sich gegenüberliegen und entlang einer Bewegungsrichtung aufeinander zu und voneinander weg bewegbar sind. Die Ober- bzw. Unterelektrode weisen jeweils mindestens eine Elektrode auf. Die Elektroden begrenzen einen Raum zur Aufnahme der zu kompaktierenden und zu verbindenden Leiter. Dieser Raum weist eine Raumlängsachse auf, die, falls Leiter in den Raum eingelegt sind, im wesentlichen parallel ist zu der Längserstreckung der Leiter. Die Größe des Raums, der auch oftmals als Verdichtungsraum beschrieben ist, hängt von der relativen Lage von Oberelektrode zur Unterelektrode ab, wobei zwischen der Elektrode der Oberelektrode und der Elektrode der Unterelektrode ein Bewegungsspalt mit einer Spaltlängserstreckung vorgesehen ist.

Vorrichtungen der eingangs beschriebenen Art dienen dazu, die Leiter beziehungsweise Litzen, in der Regel Bündel sehr filigraner Drähtchen, wie sie am Ende eines Kabels auftreten, zusammenzufassen, also zu kompaktieren und dann auch, zumindest abschnittsweis zu verschweißen, wodurch die kompaktierte, gebündelte Struktur dauerhaft zur Verfügung steht. Kompaktiert verschweißte Kabelenden können leichter zum Beispiel in Lüsterklemmen eingesteckt und verarbeitet werden.

Eine Vorrichtung dieser Art geht aus der DE 37 19 083 C2 hervor. Dabei umfasst diese Vorrichtung einen Verdichtungsraum mit einem veränderbaren Querschnitt. Der Verdichtungsraum wird durch eine etwa horizontale Sonotrodenfläche und drei relativ zur Sonotrodenfläche teils in horizontaler und teils in vertikaler Richtung verschiebbare Ambossflächen begrenzt. Die zu verbindenden elektrischen Leiter werden zunächst in den Verdichtungsraum eingelegt und danach werden die Ambossflächen bewegt, um die zu verbindenden elektrischen Leiter zu verdichten. Während der Verdichtung wird die Ultraschalleinwirkung vorgenommen.

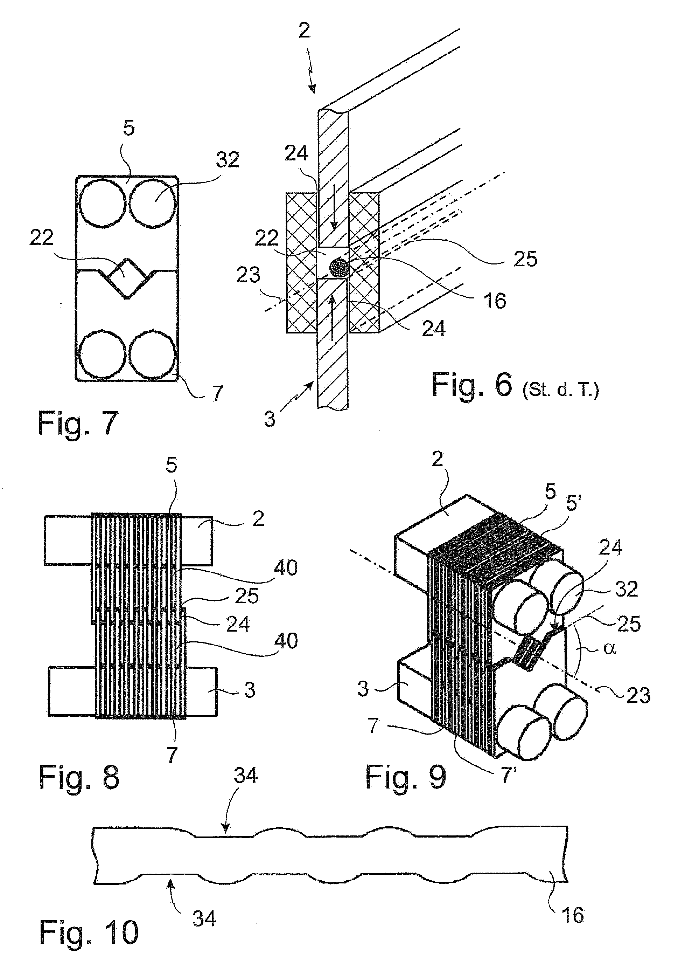

Die Situation nach dem Stand der Technik zeigt Fig. 6. Da der Raum bzw. Verdichtungsraum in seiner Querschnittsfläche (in Blickrichtung der Längserstreckung des Raums) je nach relativer Lage von Oberelektrode zur Unterelektrode veränderlich ist, ist zwischen der Elektrode von Ober- und Unterelektrode ein Bewegungsspalt vorgesehen, der, wie in Fig. 6 angedeutet, parallel zur Längserstreckung der Leiter ist. Der Bewegungsspalt zwischen Oberelektrode und Unterelektrode ist notwendig, um einerseits eine Bewegung dieser beiden Elemente relativ zueinander zu gestatten. Als Bewegungsspalt im Sinne der Erfindung wird eine Trennfuge verstanden, an der eine Bewegung stattfindet. Demzufolge kann dieser Bewegungsspalt auch gleich 0 sein. Er definiert demnach eine Trennfuge, an der eine Bewegung stattfindet. Dies wird im Sinne der Erfindung überall dort so verstanden, wo der Bewegungsspalt mit bestimmten Ausführungsformen und Weiterbildungen beschrieben wird. Vor dem Kompaktieren und Verbinden besteht die Gefahr, dass die sehr filigranen Leiter bzw. Litzen vereinzelt in den Bewegungsspalt gelangen und dort festklemmen. Hieraus resultiert eine Vielzahl von Problemen:
Zunächst wird durch den im Bewegungsspalt liegenden Leiter die freie Beweglichkeit der relativ zueinander beweglichen Elemente Ober- und Unterelektrode behindert. Gleichzeitig klemmt sich damit auch ein Draht des Kabels, dessen Enden eine Vielzahl zu verbindender Leiter aufweist, fest, das heißt die Entnahme des Kabels, dessen endseitige Leiter dann abschließend verschweißt worden sind, wird behindert. Da die sehr filigranen Litzen leicht abbrechen oder abgerissen werden können, was gerade bei einem ruckartigen Entnehmen des klemmenden Kabels aus der Vorrichtung nach dem Stand der Technik erfolgen kann, bleibt dieses den elektrischen Strom leitende Leiterstück in dem Bewegungsspalt.

Die Aufgabe der vorliegenden Erfindung besteht darin, eine Vorrichtung zum Kompaktieren und Verbinden elektrischer Leiter, insbesondere von Kabeln oder Litzen, zu schaffen, die zuverlässig einsetzbar ist.

Zur Lösung dieser Aufgabe geht die Erfindung aus von einer Vorrichtung zum Kompaktieren und Verbinden elektrischer Leiter wie eingangs beschrieben und schlägt vor, dass zwischen der Spaltlängserstreckung und der Raumlängsachse ein spitzer, rechtwinkliger oder stumpfer Winkel vorgesehen ist.

Der Pfiff der Erfindung liegt darin, dass erkannt worden ist, dass durch eine entsprechende Orientierung der Spaltlängserstreckung relativ zur Raumlängsachse das im Stand der Technik bekannt Problem des Einklemmens einer Litze in den unvermeidlichen Bewegungsspalt zuverlässig vermieden wird. Dabei geht die Erfindung insbesondere von einer Ausgestaltung aus, bei welcher die Ober- bzw. Unterelektrode aus einer Mehrzahl von einzelnen Elektroden ausgebildet ist, die im jeweiligen Zusammenwirken zwischen sich einen Bewegungsspalt ausbildet, der dann mit der Raumlängsachse einen spitzen, rechtwinkligen oder stumpfen Winkel einschließt.

Für den Fall, dass bei Betrachtung der Erfindung die Raumlängsachse die Spaltlängserstreckung nicht schneidet und sich daraus kein einschließender Winkel ermitteln lässt, sei darauf hingewiesen, dass der Fachmann selbstverständlich in der Lage ist, eine dieser beiden Richtungsachsen parallel so zu verschieben, dass die beiden Richtungen in einer gemeinsamen Ebene zum Liegen kommen und so auch einen Schnittwinkel einschließen. Dieser Winkel wird als Winkel α beschrieben.

Der Begriff Spaltlängserstreckung ist wie folgt definiert. Üblicherweise besitzt ein Spalt eine gewisse Spaltbreite. Die Spaltlängserstreckung steht rechtwinklig zur Spaltbreite und folgt den Kanten der Elektroden, die gegeneinander beweglich sind, wobei diese Bewegungsrichtung üblicherweise rechtwinklig ist zur Spaltbreite und zur Längserstreckung.

Der Raum beziehungsweise Verdichtungsraum wird gemäß dem erfindungsgemäßen Vorschlag von den Elektroden begrenzt. Es handelt sich hierbei einerseits um die Elektroden der Ober- beziehungsweise Unterelektrode, andererseits aber auch um die Vielzahl der Elektroden, die die Ober- beziehungsweise Unterelektrode aufweist. Die Anordnung ist dabei so gewählt, dass bei dem Kompaktieren die aus leitfähigem Material bestehenden Elektrodenteile das entsprechend zusammengebündelte Litzenbündel mehrseitig umschließt und bei Einschalten des elektrischen Stromes diese miteinander verschweißt.

Der durch die Elektroden definierte beziehungsweise begrenzte Raum wird durch eine Raumlängsachse beschrieben. Der Raum beziehungsweise Verdrängungsraum besitzt eine Zuführöffnung, in welcher die Leiter beziehungsweise Litzen in Richtung der Längserstreckung der Litzen einführbar ist oder aber das Kabelende, dessen Leiter entsprechend zu kompaktieren und zu verbinden ist, wird bei abgehobener Oberelektrode in die dann geöffnete Vorrichtung von oben eingelegt (in einer Bewegung im wesentlichen rechtwinklig zur Längserstreckung der Leiter). Die Raumlängsachse steht senkrecht auf der die Einführöffnung definierenden Fläche.

Bei einer bevorzugten Ausgestaltung des Vorschlages ist vorgesehen, dass der Winkel zwischen 15° und 165°, bevorzugt zwischen 45° und 135°, insbesondere zwischen 60° und 120°, insbesondere bevorzugt zwischen 75° und 105° beträgt. Es ist klar, dass je steiler, das heißt, je rechtwinkliger der Winkel zwischen der Spaltlängserstreckung und der Raumlängsachse ist, die konstruktive Ausgestaltung der erfindungsgemäßen Vorrichtung einfacher wird, obgleich die Erfindung in keinster Weise nur auf eine rechtwinklige, wie auch in dem Ausführungsbeispiel gezeigten Gestaltung beschränkt ist.

Daher definiert der Vorschlag für den Winkel auch ein Intervall, welches einerseits durch eine Intervalluntergrenze und andererseits durch eine Intervallobergrenze festgelegt ist. Als Intervalluntergrenze ist dabei zum Beispiel 15°, 20°, 25°, 30°, 35°, 40°, 45°, 50°, 55°, 60°, 65°, 70°, 75°, 80°, 85° vorgesehen. Als Intervallobergrenze sind folgende Winkelwerte vorgesehen: 95°, 100°, 105°, 110°, 115°, 120°, 125°, 130°, 135°, 140°, 145°, 150°, 155°, 160°, 165°, 170°, 175°, 179°.

Zur Erfindung und zur Offenbarung dieser Anmeldung gehören alle möglichen Kombinationen der vorgenannten Werte der Intervalluntergrenze und der Intervallobergrenze.

Der wesentliche weitere Vorteil der vorliegenden Erfindung besteht darin, dass mehrere Leiter in einer vergleichsweise einfachen Weise verdichtet bzw. kompaktiert und miteinander verbinden werden können.

Vorteilhafterweise ist die vorliegende Vorrichtung relativ einfach aufgebaut und betätigbar. Durch die spezielle Gestaltung des Verdichtungsraumes werden die in ihn eingelegten Leiter dann, wenn die Oberelektrode in Richtung auf die Unterelektrode bewegt wird, automatisch in der erforderlichen Weise verdichtet und miteinander verschweißt.

In einer vorteilhaften Ausgestaltung ist vorgesehen, dass die O-berelektrode und die Unterelektrode jeweils quer zur Bewegungsrichtung nebeneinander angeordnete und voneinander beabstandete Elektroden aufweisen.

Als Elektrode wird dabei ein plattenartiges, also flächiges Element beschrieben, das in einem (gegebenenfalls auch unterschiedlichen) Wirkkontakt mit den Leitern steht. Üblicherweise ist es die Aufgabe einer Elektrode, ein Spannungspotential vorzuhalten beziehungsweise einen Stromfluss für beliebige weitere Verwendungen zu ermöglichen. Dabei kann die Elektrode aber auch Auflage- beziehungsweise Abstützungsaufgaben für die Leiter besitzen. Insbesondere ist es möglich, dass eine Vielzahl von Elektroden hintereinander angeordnet sind und die Leiter abschnittsweise auf diesen zueinander beabstandeten Elektroden aufliegen. Dies ist gerade bei dem Einsatzzweck der erfindungsgemäßen Vorrichtung günstig, bei welchem die Litzen bevorzugt nur in gewissen Bereichen verschweißt werden sollen und nicht zwingenderweise über den gesamten offenen Kabelendbereich. Es widerspricht sich daher nicht, dass die Oberoder Unterelektrode jeweils eine Mehrzahl von Elektroden aufweist, die ihrerseits zumindest teilweise gleichartig polarisiert sind.

Diese Vielzahl von nebeneinander und in der Regel gleichartigen Elektroden bilden eine lamellenartige Struktur aus und stellen insbesondere an ihren Stirnseiten, welche die Vorder- und Rückseite der Elektrode verbinden, einen (zumindest teilweisen) leitenden Kontakt zu dem Leiter her. Da das Verschweißen der Leiter mit Stromfluss erfolgt, wird durch die lamellenartige Struktur und dem Einleiten des Stromes über die Stirnseite der (Lamellen-) Elektroden gerade an diesem Überleitungspunkt eine hohe Stromdichte und daher ein entsprechendes Schweüsergebnis, insbesondere auch in kurzer Zeit erreicht. Es ist daher nicht ein flächiges Verschweißen des ganzen Kabelendes notwendig, sondern es reicht oftmals aus, ein entsprechendes abschnsttsweises, punktartiges oder linienartiges Verschweißen (nach dem Kompaktieren) durchzuführen.

Geschickterweise ist vorgesehen, dass die Elektroden der Oberelektrode und die Elektroden der Unterelektrode quer zur Bewegungsrichtung gegeneinander versetzt sind, derart, dass sie ineinander eingreifen, wenn die Oberelektrode und die Unterelektrode aufeinander zu bewegt sind.

Die hier vorgeschlagene Ausgestaltung erlaubt es, den Raum beziehungsweise Verdichtungsraum stufenlos, also unabhängig von der tatsächlichen Dicke oder Durchmesser des Litzenbündels zu verkleinern und auf einen ausreichenden Anpressdruck von den Elektroden auf das Litzenbündel, unabhängig von deren Durchmesser zur Verfügung zu stellen, um einerseits eine gewünschte Kompaktierung und andererseits auf eine effektive elektrische Verbindung zwischen der Elektrode und dem Litzenmaterial herzustellen. Eine solche Ausgestaltung erlaubt es daher, auf verschiedene Litzenbündeldurchmesser variabel zu reagieren, ohne dabei Einstellungen an der Vorrichtung ändern zu müssen.

Geschickterweise ist vorgesehen, dass die Elektroden von Ober- beziehungsweise Unterelektrode voneinander beabstandet sind oder zwischen den Elektroden Abstandshalter angeordnet sind. Durch die daraus resultierende Beabstandung der Elektroden von Ober- beziehungsweise Unterelektrode wird ein Eintauchraum geschaffen, in den die entsprechende Gegenelektrode von Unter- beziehungsweise Oberelektrode einzutauchen vermag.

Des weiteren ist vorgesehen, dass die Elektroden der Oberelektrode beziehungsweise der Unterelektrode jeweils Ausnehmungen aufweisen, derart, dass in der ersten, geöffneten beziehungsweise zurückbewegten Position von Oberelektrode zu Unterelektrode Leiter quer zur Bewegungsrichtung in die Ausnehmungen der Oberelektrode und die Ausnehmungen der Unterelektrode einschiebbar sind und dass in der geschlossenen beziehungsweise aufeinander zu bewegten Position von Oberelektrode zur Unterelektrode die Elektroden der Oberelektrode und die Elektroden der Unterelektrode derart aufeinander zu bewegt sind, dass die in der ersten Position eingelegten Leiter beim Bewegen der Oberelektrode und der Unterelektrode in die zweite Position, in dem sich verkleinernden Raum zwischen den Ausnehmungen der Elektroden der Oberelektrode und den Ausnehmungen der Elektroden der Unterelektroden zusammengedrückt und kompaktiert werden.

Es werden nachfolgend noch Ausgestaltungen der Ausnehmungen der Elektrode beschrieben werden, die einerseits beim Zusammenführen von Oberelektrode und Unterelektrode eine entsprechende Kompaktierung des Litzenbündels ergeben, wobei insbesondere vorgesehen ist, dass hierfür nur ein Bewegungsschritt entlang der Bewegungsrichtung (relativ Aufeinander-zu-Bewegung von Oberelektrode und Unterelektrode) vorgesehen ist. Durch diese selbstkompaktierende Anordnung erfolgt eine sehr schnelle und auch insbesondere mit hoher Effizienz automatisierbare Kompaktierung und Verschweißung.

Vorteilhafterweise ist vorgesehen, dass sich zwischen den Elektroden von Oberelektrode und Unterelektrode je ein Bewegungsspalt befindet. Da die Elektroden von Oberelektrode und Unterelektrode, wie ausgeführt, quer zur Bewegungsrichtung angeordnet sind, bilden sich die lamellenartigen Elektroden auch quer, in axialer Richtung der Raumlängsachse hintereinander aus. Geschickterweise bilden diese mit der Raumlängsachse einen rechten Winkel, ohne aber die Erfindung hierauf beschränken zu wollen, da dieser Winkel identisch ist mit dem Winkel zwischen der Spaltlängserstreckung und der Raumlängsachse. Da die Ober- und Unterelektrode jeweils aus einer Vielzahl von Elektroden bestehen und die Elektroden entsprechend zusammengeführt werden, bilden sich eine vielzahl von parallel verlaufenden Bewegungsspalten an den jeweilig zusammenwirkenden Elektroden aus. All diese Bewegungsspalte werden durch eine Spaltlängserstreckung beschrieben, die erfindungsgemäß mit der Raumlängsachse einen stumpfen, spitzen oder rechten Winkel einschließt.

Vorteilhafterweise ist vorgesehen, dass die Elektroden der Oberbeziehungsweise Unterelektrode untereinander gleichartig oder identisch ausgebildet sind. Zum einen werden durch eine identische Ausgestaltung der Elektroden die Herstellungskosten der Vorrichtung entsprechend reduziert, da diese in großen Losstücken produziert werden können. Auch wird die konstruktive Ausgestaltung bei Verwendung von identischen oder möglichst gleichartigen, insbesondere was die Kontaktierung angeht, erheblich erleichtert. Das Kabelende, dessen Leiter beziehungsweise Litzen zu kompaktieren und zu verbinden sind, ist in Längserstreckung des Leiters im wesentlichen gleichartig. Daher ist es günstig, dass auch die Elektroden für ein optimales Zusammenwirken mit dem Leiter möglichst gleichartig ausgebildet sind, um so ein gleichartiges Zusammenwirken mit dem Leiter zu erreichen. Die Gleichartigkeit bezieht sich dabei insbesondere auf die dem Leiter zugewandten Elektrodenseite, zum Beispiel der Stirnseite. Geschickterweise sind die Elektroden jeweils identisch ausgebildet, was die Herstellungskosten zusätzlich senkt.

Bei einer bevorzugten Ausgestaltung des Vorschlages ist vorgesehen, dass die Elektrode auf der Vorder- bzw. Rückseite eine Begrenzungsfläche aufweist und eine, Vorder- und Rückseite verbindende Stirnseite dem Raum zugewandt ist. Der Raum, der auch als Kompaktierraum oder als Verdichtungsraum beschrieben ist, ist zum Beispiel im wesentlichen als Zylinder bzw. prismatisch ausgebildet, ohne aber die Ausgestaltung des Raumes hierauf beschränken zu wollen. Insbesondere wird die Begrenzungswand bzw. die Begrenzungswände des Raumes gebildet von den Elektroden beziehungsweise zumindest teilweise den Stirnseiten der Elektroden, wobei die Stirnseiten der Elektroden zueinander keine stetige Fläche bilden, sondern, da zwischen ihnen entsprechende Abstandshalter vorsehbar sind, stehen die Elektroden in den Raum vor beziehungsweise das Volumen zwischen den Abstandshaltern gehört ebenfalls zum Raum.

In einer vorteilhaften Ausgestaltung ist vorgesehen, dass die Elektrode zumindest einen aus leitfähigem Material bestehenden Elektrodenteil, sowie zumindest einem aus isolierenden Material bestehenden Isolationsteil aufweist. Wie bereits ausgeführt ist die Elektrode gemäß dem Vorschlag sehr variabel ausgestaltet. Insbesondere ist vorgesehen, dass die Elektrode mehrere unterschiedliche Bereiche aufweist, so ist zum Beispiel mindestens ein Elektrodenteil vorgesehen sowie auch eine Isolationsteil. Die Leitfähigkeit bzw. isolierende Eigenschaft bezieht sich dabei auf die elektrische Leitfähigkeit. Es steht daher nicht im Widerspruch zu der Offenbarung dieser Anmeldung, dass die Elektrode heterogen ist, also zumindest ein Elektrodenteil und ein Isolationsteil aufweist oder auch mehrere Elektrodenteile, die jeweils durch Isolationsteile voneinander getrennt bzw. isoliert sind.

Geschickter Weise ist vorgesehen, dass der Isolationsteil, zum Beispiel als Beschichtung auf der Begrenzungsfläche oder als separater, mit dem Elektrodenteil verbundener, Abstand und/oder die Begrenzungsfläche bildendes Element ausgebildet ist. Insbesondere ist der Isolationsteil auch dazu vorgesehen, den leitfähigen Elektrodenteil bzw. die Elektrode gegenüber einer anderen Elektrode (zum Beispiel anderen Elektrodengattung, zum Beispiel Oberelektrode oder Unterelektrode) zu isolieren. Da die Elektroden von Oberelektrode und Unterelektrode relativ zueinander sehr nah anstellbar sind, ist gerade zwischen den Elektroden unterschiedlicher Polung ein Kurzschluss zu vermeiden. Die Verwendung eines Isolationsteils, zum Beispiel einer (einseitigen) Beschichtung, zum Beispiel auf der seitlichen Begrenzungsfläche, stellt ein zuverlässiges Mittel zur Kurzschlussvermeidung dar.

Des Weiteren ist vorgesehen, dass die Elektrode mehrere, je durch ein Isolationsteil getrennte Elektrodenteile aufweist. Durch diesen Vorschlag ist es möglich, die Elektrode noch flexibler auszugestalten. Dieser Vorschlag erreicht nämlich, dass eine Elektrode zum Beispiel räumlich der Ober- oder Unterelektrode zugeordnet ist, aber, aufgrund der elektrischen Isolierung ihrer beiden Elektrodenteile zueinander, aber auf unterschiedlichen Spannungspotenzialen liegen. Der Begriff Elektrode ist daher gemäß dieser Offenbarung sehr variabel auszulegen und definiert.

Vorteilhafterweise ist vorgesehen, dass unterschiedliche Elektrodenteile jeweils auf gleichem oder unterschiedlichem Spannungspotential liegen. Dieser Vorschlag umfasst die Möglichkeit, dass ein erster Elektrodenteil auf positivem Spannungspotenzial und der zweite Elektrodenteil auf negativem Spannungspotenzial liegt und so zwischen diesen beiden Elektrodenteilen ein elektrischer Strom fließt, wenn diese Elektrodenteile mit stromleitendem Material (zum Beispiel die zu kompaktierenden bzw. zu verschweißenden Leitern) in Kontakt gebracht werden. Der Begriff Elektrode ist daher nicht begrenzt auf eine Unipolarität auszulegen, er ist im Sinne dieser Offenbarung sehr variabel definiert. Gemäß den hier vorgestellten Möglichkeiten bestehen mehrere Varianten, wie der Strom fließen kann. Zunächst ist es möglich, dass der Strom zwischen Elektroden von Oberelektrode und Elektroden der Unterelektrode fließt. Hierauf ist der Vorschlag aber nicht begrenzt. Es ist auch vorgesehen, dass der Strom, der zu einer verschweißten Verbindung des letzten Bündels führt, zwischen den Elektrodenteilen einer und derselben Elektrode fließt.

Bei einer bevorzugten Ausgestaltung des Vorschlages ist vorgesehen, dass beim Anlegen einer Spannung zwischen den Elektroden bzw. den Elektrodenteilen die Leiter durch Stromflüsse zwischen den Elektroden der Oberelektrode und den Elektroden der Unterelektrode bzw. zwischen den Elektrodenteilen über die Leiter verschmolzen werden.

In einer vorteilhaften Ausgestaltung ist vorgesehen, dass die Elektrode zu einer Symmetrieachse symmetrisch ausgebildet ist und die Symmetrieachse zur Bewegungsrichtung parallel ist. Eine symmetrische Ausgestaltungen der Elektrode führt zu verschiedenen Vorteilen. Zunächst ist die Krafteinprägung auf das Litzenbündel gleichmäßig. Durch die symmetrische Ausgestaltung realisiert man auch eine symmetrische Ausgestaltung des kompaktierten Bereiches.

Geschickter Weise ist vorgesehen, dass die Elektrodenteile von Ober- oder Unterelektrode quer zur Bewegungsrichtung gegeneinander versetzt sind, derart, dass die Elektrodenteile zwischen Isolationsteil der Unter- bzw. Oberelektroden eingreifen, wenn sich die Oberelektrode und die Unterelektrode relativ aufeinander zu bewegen. Zwischen den Elektroden von Oberelektrode bzw. Unterelektrode (Allgemein Elektrodengattung) ist dabei ein entsprechender freier Raum oder Beabstandung vorgesehen, dass die Elektrode der jeweilig anderen Elektrodengattung kurzschlussfrei zwischen den Elektroden der ersten Elektrodengattung einzutauchen vermag. Da die Elektroden in ihrer Ausgestaltung, insbesondere in der Gestaltung der Stirnseite zum Beispiel V-förmig oder in anderer Weise trichterförmig ausgebildet sind, wird durch die Relativbewegung von Oberelektrode zu Unterelektrode das Bündel von Leitern bzw. Litzen eng zusammengeschoben und für den Schweißvorgang positioniert. Durch die vorgeschlagene Ausgestaltung derart, dass die Elektroden unterschiedlicher Elektrodengattungen (Oberelektrode oder Unterelektrode) zwischen sich einzutauchen vermögen, sind auch unterschiedliche Kabeldurchmesser kein Problem, da dieses endlich nur in einer veränderten Relativlage am Ende der Relativbewegung von Oberelektrode zu Unterelektrode resultiert. Das bedeutet, dass auch im Falle, dass unterschiedliche Kabelenden zu bearbeiten sind, nicht sofort die vorgeschlagene Vorrichtung umzurüsten ist.

Als Elektrodengattung wird zum Beispiel Unterelektrode oder Oberelektrode verstanden. Der Begriff Elektrodengattung ist dabei aber nicht auf seine elektrischen Eigenschaften beschränkt auszulegen, er hat vielmehr auch eine Sinnbedeutung bezüglich der geometrischen Anordnung der verschiedenen Elektroden an der Vorrichtung. Des Weiteren bedeutet Ober- oder Unterelektrode nicht eine räumliche Fixierung, sondern eigentlich nur eine Unterscheidung zwischen einer ersten Elektrodengattung und einer zweiten Elektrodengattung, ohne damit eine bevorzugte räumliche Anordnung festzulegen. Der erfindungsgemäße Vorschlag ist in gleicher Weise auch dann realisierbar, wenn anstelle einer vertikalen relativen Zustellbewegung von Oberelektrode zu Unterelektrode eine horizontale Bewegung bzw. Relativbewegung vorgesehen ist.

Des Weiteren ist vorgesehen, dass das Isolationsteil der Elektrode zumindest einseitig, bezogen auf die Bewegungsrichtung, gegenüber dem Elektrodenteil einen vorragenden Isolationsabschnitt bildet. Das einseitig vorragende Isolationsteil der Elektrode ist dabei zum Beispiel auf einer Begrenzungsfläche vorgesehen. Es ist dabei vorgesehen, dass das Isolationsteil dem Elektrodenteil vorragt und überragt. Dabei ist es grundsätzlich auch möglich, dass das Isolationsteil an der Stirnseite vorgesehen ist.

Vorteilhafterweise ist vorgesehen, dass der vorragende Isolationsabschnitt der Elektrode einer Oberelektrode bzw. Unterelektrode zwischen die Elektrodenteile benachbarter Elektroden der Unterelektrode bzw. Oberelektrode eingreift, wenn sich die Oberelektrode und die Unterelektrode relativ aufeinander zu bewegen. In Bewegungsrichtung gesehen eilt somit dem Elektrodenteil ein Isolationsteil voraus. Dies ist besondere dann vorteilhaft, wenn die Anordnung so gewählt ist, dass die Elektroden bei der Zustellbewegung ineinander eintauchen. Es tauchte dann zuerst das Isolationsteil der Elektrode der ersten Elektrodengattungen zwischen die Elektroden der zweiten Elektrodengattung ein. Eine Kurzschlussgefahr ist ausgeschlossen.

Des Weiteren ist in dem Vorschlag vorteilhafterweise vorgesehen, dass der Raum, der zur Aufnahme der Leiter dient, sowohl von Isolationsteil wie auch vom Elektrodenteil der Elektroden begrenzt ist. Durch eine solche Ausgestaltung wird die Richtung des Stromflusses in günstiger Weise beeinflusst. Die Stromeinprägung in das Litzenbündel wird dabei entsprechend auf dem ausleitfähigen Material bestehenden Elektrodenteil konzentriert, wenngleich das Litzenbündel an weiteren Oberflächen, insbesondere der Stirnseite des Isolationsteils anliegt.

Bei einer bevorzugten Ausgestaltung des Vorschlages ist vorgesehen, dass der Isolationsteil und Elektrodenteil der Elektroden von Oberelektrode und Unterelektrode in Bewegungsrichtung gesehen einander gegenüberstehen. Eine solche vorteilhafte Ausgestaltung wird dann erreicht, wenn die Isolationsteile der gegenüberstehenden Elektroden auf jeweils unterschiedlichen Seiten (rechtwinklig zur Begrenzungsfläche gesehen) vorragen. Somit können die Isolationsteile bei der Relativzusammenführbewegung aneinander vorbei gleiten und einen Kurzschluss zuverlässig vermeiden. Dadurch ist es möglich, die Elektrodenteile der zusammenwirkenden Elektrodengattungen an dem Litzenbündel gegenüber orientiert anzuordnen.

Des Weiteren ist vorgesehen, dass die Elektroden der Oberelektrode und Elektroden der Unterelektrode im Bereich des Bewegungsspalts durch einen isolierenden Luftspalt getrennt sind. Durch die Anordnung eines Isolationsteils auf der Elektrode ist es möglich, dass die Elektroden einander hier berühren können. Bei dieser Variante ist das Spiel zwischen den beiden beweglichen Elementen extremst verringerbar, da durch die Anordnung des Isolationsteils ein Kurzschluss vermieden wird. Natürlich ist es möglich, einen entsprechenden Luftspalt als Isolierung vorzusehen. Mit dieser Variante ist es dann nicht notwendig, in Richtung der Raumlängsachse, ein isolierende Element auf der Elektrode anzuordnen.

In einer vorteilhaften Ausgestaltung ist vorgesehen, dass zumindest eine Elektrode im Bereich der Stirnseite derart scharfkantig ausgebildet ist, so dass die Lackisolationsschicht eines Leiters verletzbar ist. Oftmals sind die Leiter mit einer Lackisolationsschicht überzogen. Diese Lackisolationsschicht bildet eine erste Isolationsschicht des Kabels. Im Bereich des Kompaktieren allerdings ist diese Lackisolationsschicht ungünstig, da diese natürlich auch dem Strom, der zum Verschweißen der Litzen dient, isolierend entgegensteht. Die Elektroden werden mit einer gewissen Kraft gegen das Litzenbündel angestellt. Durch diese Kraft wird ein Kompaktieren, d.h. eine entsprechende formgebende Kraft auf das Litzenbündel ausgeübt. Geschickterweise ist nun die Stirnfläche der Elektrode derjenige Bereich, der mit der Litze zusammengewirkt. Diese Stirnseite ist verhältnismäßig schmal, wodurch sich hier entsprechend hohe Bearbeitungsdrücke ergeben, die zu einer Verletzung der den Leiter schützenden Lackisolierung führt. Ist die Lackisolierung an dieser Stelle verletzt, ist es möglich, dass der verschweißende Strom dort eindringt und über die Hitzeentwicklung an dem elektrischen Widerstand wird dann die Lackisolierung der anderen Leiter zerstört. Hierzu besitzt die Stirnseite der Elektrode zum Beispiel eine messerartige, also spitz auslaufende, Ausgestaltung. Es ist auch möglich, dass die Stirnseite eine Ecke oder sonstige scharf vorstehende Kante oder Kanten aufweist, die zu einer Verletzung der Lackisolierung führt. Hiermit wird ein Mittel zur Verfügung gestellt und vorgeschlagen, mit der es möglich ist, auch mit Isolierlack überzogene Litzen in einer Vorrichtung zum Kompaktieren zu verarbeiten und auch zu verschweißen.

Die Anmelderin behält sich vor, für dieses Merkmal eigenständigen Patentschutz, zum Beispiel im Rahmen einer Teilanmeldung, zu beantragen. Die Eigenständigkeit dieses Merkmales bezieht sich auf die Unabhängigkeit dieses Merkmales, bezogen auf die Gedanken dieser Anmeldung, Erfindung bzw. dem Gegenstand der unabhängigen Ansprüche.

Geschickter Weise ist vorgesehen, dass die Elektrode von Ober- bzw. Unterelektrode als Stapel von im wesentlichen gleichartigen Elektroden, gegebenenfalls durch zwischengelegte Distanz- oder Abstandshalter, vorhaltbar ist, der komplett im Umrüstfall auf Haltedorne oder Halteschrauben des Halteteiles aufschiebbar ist, wozu die Elektrode gegebenenfalls mit den Distanz- oder Abstandshalter kommunizierenden Öffnungen ausgestattet ist und die Öffnungen mit dem Haltedorn bzw. den Halteschraube zusammengewirkt. Durch eine solche Ausgestaltungen wird das Umrüsten von Oberelektrode oder Unterelektrode erheblich erleichtert und beschleunigt. Ober- oder Unterelektrode bestehen aus einem Stapel von untereinander jeweils gleichartigen Elektroden, die im Wartungsfalle einfach auf den Haltedorn oder die Halteschraube des Halteteils aufzuschieben ist. Des Weiteren ist günstigerweise vorgesehen, dass die Elektrode mindestens zwei Stirnseitenkanten aufweist, die zueinander einen spitzen, rechten oder stumpfen Kantenwinkel einschließen und die Stirnseitenkanten mit der Bewegungsrichtung je einen spitzen Bewegungswinkel einschließen.

Üblicherweise ist die Stirnseitenkante eine Gerade im geometrischen Sinne. Der Begriff Stirnseitenkante ist aber hierauf nicht beschränkt auszulegen. Neben einer geraden Ausgestaltung der Stirnseitenkante ist auch eine konvexe, konkave oder sonstige geometrische Form möglich. Für den Fall, dass die Stirnseitenkante von einer geometrischen geraden Variante abweicht, zum Beispiel halbrund ausgebildet ist, so bilden sich hier auch zwei Stirnseitenkanten aus, die sich zum Beispiel aus den Tangentenbereich oder Sekantenbereich ergeben. Als Stirnseitenkante wird dabei die Abschlusskante der Stirnseite (rechtwinklig zur Begrenzungsfläche) verstanden. Diese Kanten, die mit der Bewegungsrichtung einen spitzen Bewegungswinkel einschließen, führt dazu, dass bei der Relativbewegung von Oberelektrode zu Unterelektrode der Kraftvektor der Relativbewegung entlang der Stirnseitenkante in zwei Komponenten aufgeteilt wird, was zu dem gewünschten Kompaktieren des Bündels führt. Dabei wird günstigerweise nur eine Bewegung benötigt, d.h. das Kompaktieren des Litzenbündels, was ein Verdichten in der Fläche beinhaltet, wird durch die geschickte Ausgestaltung der Elektrode mit nur einer Bewegungskomponente der Elektrode realisiert. Geschickte Weise ist dabei die Ausgestaltung der Stirnseitenkante in Ansicht gesehen trichter- oder dachförmig. Bei der Relativbewegung von Oberelektrode und Unterelektrode werden dabei nicht nur die Leiter bzw. Litzen in Bewegungsrichtung zusammengeschoben, sondern auch entlang der schräg orientierten Seitenkanten.

In einer vorteilhaften Ausgestaltung ist dabei zum Beispiel vorgesehen, dass die Ausnehmungen der Elektroden der Oberelektrode und die Ausnehmungen der Elektroden der Unterelektrode jeweils dreieckförmig ausgebildet sind, wobei sich die im weitesten in die Elektroden der Oberelektrode bzw. in die Elektroden der Unterelektrode eingreifenden Spitzen bzw. der gebildeten Dreiecke vorzugsweise in der Bewegungsrichtung gegenüberliegen.

Vorteilhafterweise ist vorgesehen, dass die Ausnehmungen der Elektroden der Oberelektrode und die Ausnehmungen der Elektroden der Unterelektrode jeweils quer zur Bewegungsrichtung deckungsgleich hintereinender angeordnet sind.

Des Weiteren ist in dem Vorschlag vorteilhafterweise vorgesehen, dass die Ausnehmungen der Elektroden der Oberelektrode und die Ausnehmungen der Elektroden der Unterelektrode jeweils gleich bemessen sind.

Bei einer bevorzugten Ausgestaltung des Vorschlages ist vorgesehen, dass die Ausnehmungen der Elektroden der Oberelektrode und die Ausnehmungen der Elektroden der Unterelektrode jeweils prismenförmig ausgebildet sind, wobei sich die im weitesten in die Elektroden der Oberelektrode bzw. in die Elektroden der Unterelektrode eingreifenden Spitzen der gebildeten Dreiecke vorzugsweise in der Bewegungsrichtung gegenüberliegen.

Des Weiteren ist vorgesehen, dass zwischen den Seitenkanten der Ausnehmungen der Elektroden der Oberelektrode und den Seitenkanten der Ausnehmungen der Elektroden der Unterelektrode jeweils ein spitzer, stumpfer oder rechter Winkel besteht, sodass die Ausnehmungen der Elektroden der Oberelektrode und die Ausnehmungen der Elektroden der Unterelektrode jeweils gleich bemessen sind. Geschickter Weise ist vorgesehen, dass zwischen den Seitenkanten der Ausnehmungen der Elektroden der Oberelektrode und den Seitenkanten der Ausnehmungen der Elektroden der Unterelektrode jeweils ein rechter Winkel besteht, sodass die Ausnehmungen der Elektroden der Oberelektrode und die Ausnehmungen der Elektroden der Unterelektrode in der ersten Position einen quer zur Bewegungsrichtung verlaufenden, rechteckigen Raum umschließen.

Des Weiteren ist günstigerweise vorgesehen, dass die Ausnehmungen der Elektroden der Oberelektrode und die Ausnehmungen der Elektroden der Unterelektrode jeweils gebogen, halbrund oder rechteckig ausgebildet sind. Diese hier vorgeschlagenen Ausgestaltungen der Ausnehmung begünstigen das Kompaktieren des Litzenbündels mit nur einer Bewegungskomponente in Bewegungsrichtung. Die hier vorgeschlagenen Varianten besitzen jeweils mindestens zwei Seitenkantenbereiche, die winklig zueinander verlaufen.

Vorteilhafterweise ist vorgesehen, dass die Elektroden der Oberelektrode und die Elektroden der Unterelektrode jeweils aus einem Metallmaterial, vorzugsweise aus einem Wolfram-Lanthan-Elektrodenmaterial oder einem Wolfram-Kupfer-Elektroden-Material gebildet sind. Die hier vorgeschlagenen Materialien zeichnen sich zum einen durch eine elektrische Leitfähigkeit und zum anderen durch einen sehr hohen Schmelzpunkt aus. Ein hoher Schmelzpunkt ist günstig, da mit den Elektroden ein Verschweißen, also ein thermisches Verschmelzen der Litzen erfolgen soll. Vorteilhafterweise ist der Schmelzpunkt der Elektroden deutlich höher als der Schmelzpunkt des Materials der Litzen.

Des Weiteren ist in dem Vorschlag vorteilhafterweise vorgesehen, dass als isolierendes Material Keramik vorgesehen ist. Zum Beispiel wird als isolierendes Material Siliziumsnitrit oder Zirkonoxid vorgeschlagen.

Bei einer bevorzugten Ausgestaltung des Vorschlages ist vorgesehen, dass die Elektroden der Oberelektrode und die Elektroden der Unterelektrode jeweils sich gegenüberliegende Aussparungen aufweisen, durch die nach dem Einsetzen der Elektroden in das obere Halteteil und der Elektroden in das untere Halteteil Führungsstäbe verlaufen, die in dem oberen Halteteil bzw. in dem unteren Halteteil angeordnet sind.

Des Weiteren ist vorgesehen, dass zwischen jeweils zwei benachbarten Elektroden der Oberelektrode und zwischen jeweils zwei benachbarten Elektroden der Unterelektrode Abstandsteile eingesetzt sind, die sich gegenüberlieqende Aussparungen besitzen, in die die Führungsstäbe eingreifen.

In einer vorteilhaften Ausgestaltung ist vorgesehen, dass die Abstandsteile aus elektrisch leitfähigem Materialien bestehen.

Geschickter Weise ist vorgesehen, dass die Vorrichtung einen Bewegungsantrieb für die Relativbewegung von Oberelektrode und Unterelektrode, insbesondere ein von einer Maschinensteuerung steuerbarer Bewegungsantrieb aufweist und die Maschinensteuerung auch auf die Stromquelle wirkt, deren Anschlüsse mit den Elektroden bzw. Elektrodenteilen von Oberelektrode bzw. Unterelektrode verbunden ist. Durch diese vorteilhafte Ausgestaltung wird erreicht, dass zuerst das mechanische Kompaktieren des Litzenbündels erfolgt und der Schweißstrom erst dann eingeschaltet wird, wenn das Kompaktieren abgeschlossen ist.

Des Weiteren ist günstigerweise vorgesehen, dass für die Relativbewegung von Oberelektrode zu Unterelektrode und zurück nur die Oberelektrode oder nur die Unterelektrode bewegt wird und die Unterelektrode bzw. Oberelektrode feststeht oder sowohl Oberelektrode wie auch Unterelektrode bewegt werden. Im Gegensatz zu den Vorschlägen nach dem Stand der Technik wird das Kompaktieren mit genau nur einem Bewegungsantrieb realisiert. Dies führt zu einer einfachen Konstruktion, weil nur eine Kinematik- bzw. eine Linearbewegung vorzusehen ist. Für den Fall, dass die Relativbewegung von Unterelektrode und Oberelektrode durch eine gemeinsame Bewegung dieser beiden Elektroden erfolgt, ist geschickter Weise eine entsprechende Kopplung deren Bewegung und Ableitung von nur einem Bewegungsantrieb vorgesehen, wodurch weiterhin das Antriebskonzept sehr einfach gestaltet wird.

Die Anmelderin behält sich vor, für dieses Merkmal eigenständigen Patentschutz, zum Beispiel im Rahmen einer Teilanmeldung, zu beantragen. Die Eigenständigkeit dieses Merkmales bezieht sich auf die Unabhängigkeit dieses Merkmales bezogen auf die Gedanken dieser Anmeldung, Erfindung bzw. dem Gegenstand der unabhängigen Ansprüche.

Vorteilhafte Ausgestaltungen der Erfindung gehen aus den Unteransprüchen hervor.

In der Zeichnung ist die Erfindung insbesondere in einem Ausführungsbeispiel schematisch dargestellt. Es zeigen:
- Fig. 1: in perspektivischer Darstellung eine erfindungsgemäße Vorrichtung zum Verdichten und Verbinden elektrischer Leiter,
- Fig. 2: eine Seitenansicht der Vorrichtung der Fig. 1 entlang der Schnittlinie II-II der Fig. 1,
- Fig. 3a, 3b: Darstellungen zur Erläuterung des Prinzips der vorliegenden Erfindung, und
- Fig. 4, 5: Weiterbildungen der Erfindung,
- Fig. 6: die Situation nach dem Stand der Technik bei einer Vorrichtung zum Kompaktieren von Litzen.
- Fig. 7: in einer Seitenansicht ein weiteres Beispiel der erfindungsgemäßen Vorrichtung.
- Fig. 8 e: eine Draufsicht nach Fig. 7
- Fig. 9: eine perspektivische Darstellung nach Fig. 7
- Fig. 10, 18: in Ansicht die Struktur der mit der erfindungsgemäßen Vorrichtung kompaktierten und verschweißten Leiter.
- Fig. 11: in einer Seitenansicht den Aufbau einer Elektrode nach einem weiteren erfindungsgemäßen Vorschlag.
- Fig. 12: eine Draufsicht auf eine Oberelektrode, bestehend aus mehreren Elektroden nach Fig. 11.
- Fig. 13: eine perspektivische Darstellung nach Fig. 12.
- Fig. 14: eine perspektivische Darstellung einer weiteren erfindungsgemäßen Vorrichtung, realisiert aus Oberund Unterelektroden nach Fig. 13.
- Fig. 15: eine Ansicht auf das Ausführungsbeispiel nach Fig. 14.
- Fig. 16: eine Ansicht einer weiteren erfindungsgemäßen Vorrichtung.
- Fig. 17: eine perspektivische Darstellung der erfindungsgemäßen Vorrichtung nach Fig. 16.

In Fig. 6 ist in einer dreidimensionalen Ansicht die Situation nach dem Stand der Technik schematisch dargestellt. Die zu verbindenden Leiter oder Litzen 16, zum Beispiel das Ende eines Kabels, liegt in einem Raum 22 ein, der gebildet ist von zwei gegeneinander verschiebbaren Elektroden 2, 3. Der Raum 22 ist zylinderartig oder prismatisch gebildet und wird durch eine Raumlängsachse 23 beschrieben. Damit Oberelektrode 2 und Unterelektrode 3 gegeneinander verschiebbar sind, ist ein Bewegungsspalt 24 zwischen den bewegbaren Elementen vorgesehen. An dem Bewegungsspalt 24 bildet sich eine Spaltlängserstreckung 25 aus, die parallel verläuft mit der Längserstreckung des eingeführten Leiters 16. Hier besteht das Risiko, dass die filigranen Litzen 16 in den Spalt 24 gelangen und dort dann zu entsprechenden Problemen führen. Nach der Lösung nach dem Stand der Technik ist die Raumlängsachse 23 im wesentlichen parallel verlaufend zur Spaltlängserstreckung 25 sowie zur Längserstreckung des in den Raum 22 eingelegten Leiters 16.

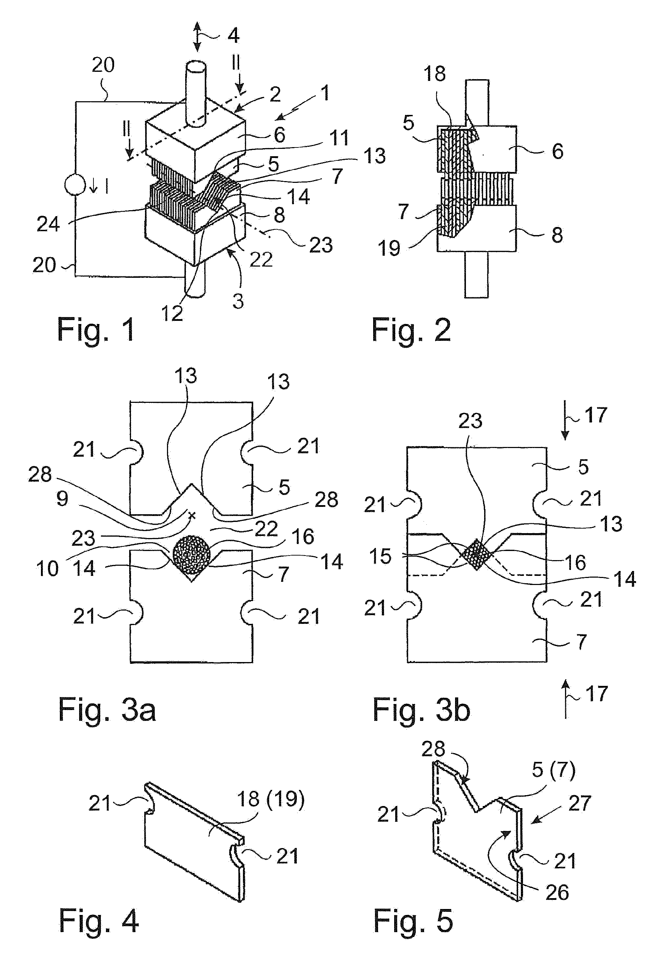

Gemäß Fig. 1 besteht die erfindungsgemäße Vorrichtung 1 zum Kompaktieren und Verbinden elektrischer Leiter 16 im wesentlichen aus einer Oberelektrode 2 und einer Unterelektrode 3, die entlang des Pfeils 4 aufeinander zu und voneinander weg relativ bewegbar sind. Die Oberelektrode 2 umfasst in Längsrichtung (Einsteckrichtung oder Längserstreckung der Leiter 16) hintereinander angeordnete und voneinander beabstandete Elektroden 5, die vorzugsweise in einem (rechteckigen) Halteteil 6 montiert sind und gehalten werden.

Entsprechend umfasst die Unterelektrode 3 mehrere in Längsrichtung hintereinander angeordnete und voneinander beabstandete Elektroden 7, die vorzugsweise in einem Halteteil 8 montiert sind und gehalten werden.

Die Längsrichtung verläuft dabei rechtwinklig zur Bewegungsrichtung 4.

Die in quer zur Bewegungsrichtung verlaufenden Elektroden 5 der Oberelektrode 2 sowie 7 der Unterelektrode 3 sind derart voneinander beabstandet, dass dann, wenn die Oberelektrode 2 in Richtung auf die Unterelektrode 3 bewegt wird, die Elektroden 5 der Oberelektrode 2 in die Räume zwischen den Elektroden 7 der Unterelektrode 3 eingreifen und umgekehrt die Elektroden 7 der Unterelektrode 3 in die Räume zwischen den Elektroden 5 der Oberelektrode 2 eingreifen.

Die Vielzahl von gleichartigen Elektroden 5 der Oberelektrode 2 und der gleichartigen Elektrode 7 der Unterelektrode 3 begrenzt einen Raum 22, der auch als Verdichtungs- oder Kompaktierraum beschrieben ist. In diesen Raum 22 werden die Leiter 16, die zu kompaktieren und zu verschweißen sind, eingelegt oder eingeschoben. Der Raum 22 ist prismatisch oder zylindrisch ausgebildet und wird durch eine Raumlängsachse 23 beschrieben, die in der Darstellung nach Fig. 3a senkrecht zur Blattebene verläuft.

An den einander zugewandten Seiten weisen die Elektroden 5 der Oberelektrode 2 jeweils Ausnehmungen 9 und die Elektroden 7 der Unterelektrode 3 jeweils Ausnehmungen 10 auf. Diese Ausnehmungen 9, 10 bilden den Raum 22. Die Ausnehmungen führen zu Stirnseiten 28 beziehungsweise Stirnseitenkanten 33a, 33b, die winklig zueinander angeordnet sind. Die Ausnehmungen 9 bzw. 10 sind jeweils in der Längsrichtung deckungsgleich hintereinander angeordnet. Vorzugsweise sind die Ausnehmungen 9 und 10 jeweils prismenförmig ausgebildet, wobei sich die am weitesten in die Elektroden 5 bzw. 7 eingreifenden Spitzen 11 bzw. 12 der gebildeten Dreiecke vorzugsweise in der Richtung des Pfeils 4, das heißt also in der Bewegungsrichtung der Oberelektrode 2 und der Unterelektrode 3, gegenüberliegen. Vorzugsweise besteht zwischen den Seitenkanten 13 der Ausnehmungen 9 und den Seitenkanten 14 der Ausnehmungen 10 jeweils ein rechter Winkel, sodass die Ausnehmungen 9 und 10 dann, wenn die Elektroden 5 und 7 ineinander eingreifen gemäß Fig. 3b einen in der Längsrichtung verlaufenden rechteckigen Tunnel bzw. Verdichtungsraum 15 umschließen. Das seitliche Verschieben der Oberelektroden 2 und 7 gegeneinander ändert die Querschnitts-Verhältnisse (variabler Querschnitt einstellbar).

Es wird darauf hingewiesen, dass je nach Anforderung an die Querschnitte der verdichteten und verschweißten Leiter 16 auch andere Formen der Ausnehmungen 9 und 10 möglich sind.

Beispielsweise können die Ausnehmungen 9 und 10 jeweils halbkreisförmig ausgestaltet sein.

Das obere Halteteil 6 sowie das untere 8 bestehen aus einem elektrisch leitenden Material. Die in den Halteteilen 6 bzw. 8 gehaltenen bzw. montierten Elektroden 5 bzw. 7 bestehen vorzugsweise aus einem Schwermetall. Sie weisen die Form von Plättchen auf.

Zum Kompaktieren bzw. Verdichten werden zunächst die miteinander zu verbindenden Leiter 16 in der aus der Fig. 3a erkennbaren Weise zwischen die Elektroden 5 und 7 eingelegt. Zum Kompaktieren werden dann die Elektroden 5 und 7 in der Richtung der Pfeile 17 der Fig. 3b aufeinander zu bewegt, sodass die elektrischen Leiter 16 in einem durch die Ausnehmungen 9 und 10 gebildeten Verdichtungsraum 15 kompaktiert werden, derart, dass sie dicht aneinander liegen. Dadurch dass die Größe des durch die Ausnehmungen 9 und 10 gebildeten Verdichtungsraumes 15 vom Annäherungsgrad der Elektroden 5 und 7 abhängt, kann durch Bestimmen des Annäherungsgrades eine einfache Anpassung an die Anzahl der miteinander zu verbindenden Leiter 16 erreicht werden.

Anschließend wird gemäß Fig. 1 über die mit der Oberelektrode 2 und der Unterelektrode 3 elektrisch in Verbindung stehenden Zuleitungen als Anschluss 20 ein Strom von der Stromquelle I zugeführt, sodass die kompaktierten Leiter 16 durch die über die elektrisch leitenden Halteteile 6, 8, die Elektroden 5, 7 und die Leiter 16 fließenden Teilströme erwärmt und miteinander verschweißt werden.

Im Folgenden wird im Zusammenhang mit den Fig. 4, 5 erläutet, wie die Elektroden 5 bzw. 7 vorteilhaft in den Halteteilen 6 bzw. 8 montiert sind. An ihren in die Halteteile 6 bzw. 8 eingreifenden Seiten besitzen die Elektroden 5 bzw. 7 sich quer zur Längsrichtung gegenüberliegende, nach außen öffnende, vorzugsweise halbkreisförmige Aussparungen 21, die in Längsrichtung verlaufende, komplementär ausgebildete Führungsstangen (nicht dargestellt) der Halteteile 6 bzw. 8 eingreifen. Um die erforderlichen Abstände zwischen den Elektroden 5 bzw. 7 sicherzustellen, sind plättchenartige Abstandsteile als Abstandshalter 18 bzw. 19 vorgesehen, wobei jeweils zwischen zwei benachbarten Elektroden 5, 5 bzw. 7, 7 ein Abstandteil 18 bzw. 19 vorgesehen ist. Die Abstandsteile weisen vorzugsweise ebenfalls die genannten Aussparungen 21 aus, die in die erwähnten Führungsstangen eingreifen.

In Ansicht gesehen ist die Elektrode 5, 7 auf der Oberseite mit einer V-förmigen Ausnehmung ausgestattet. Die Elektrode ist platten- oder flächenartig, das heißt ihre Flächenabmessungen und Dimensionen sind deutlich größer als ihre Dicke. Es bilden sich daher entsprechende vorderseitige 26 und rückseitige 27 Begrenzungsflächen aus, die durch eine Stirnseite 28 miteinander verbunden sind. Die Breite der Stirnseite 28 entspricht der Dicke der Elektrode. Die Stirnseite 28 ist dabei dem Raum 22 zugewandt. Auf diesem relativ schmalen Bereich liegen die Leiter 16 auf und haben so mechanischen wie auch elektrischen Kontakt.

Vorzugsweise bestehen die einzelnen Elektroden 5, 7 aus einem Wolfram-Lanthan-Elektrodenmaterial. Die Oberflächen der Elektroden 5, 7 sind, abgesehen von den Seitenkanten 13 bzw. 14, mit einer isolierenden Schicht versehen.

Insbesondere in Fig. 9 ist der erfinderische Pfiff gut zu erkennen. Die einzelnen Elektroden 5, 5' beziehungsweise 7, 7' erstrecken sich entlang der Raumlängsachse 23 hintereinander derart, dass deren Begrenzungsflächen rechtwinklig zur Raumlängsachse 23 orientiert sind. Dies gilt sowohl für die Elektroden 5, 7 der Ober- 2 wie Unterelektrode 3. Da die Elektroden 5, 7 in die zwischen ihnen vorgesehenen freien Beabstandungen 40 (siehe Fig. 8) eintauchen, bilden sich entsprechende Bewegungsspalte 24 aus, deren Spaltlängserstreckungen 25 mit der Raumlängsachse 23 einen in dem hier gezeigten Ausführungsbeispiel rechten Winkel α einschließt.

Ober- 2 und Unterelektrode 3 werden in dem hier gezeigten Ausführungsbeispiel durch zwei parallel verlaufende Halteschrauben 32 gebildet, auf die die Elektroden 5, 7, die entsprechende Öffnungen aufweisen, aufgefädelt sind. Hierdurch wird die Montage oder auch das Umrüsten erheblich erleichtert.

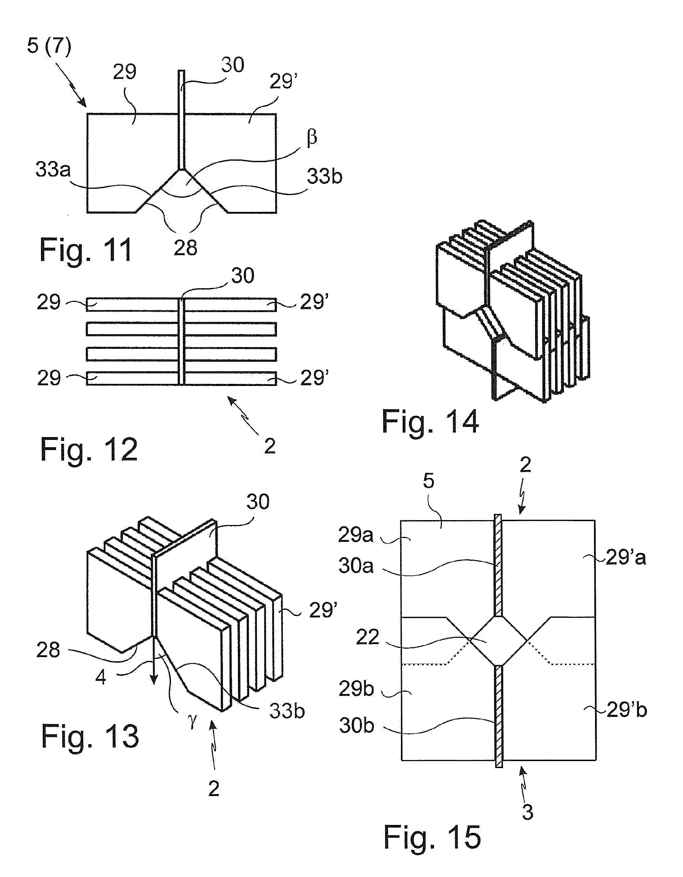

In Fig. 11 ist das Konzept der Ausgestaltung bzw. Anordnung einer Vielzahl von Elektroden 5, 7 als Ober- bzw. Unterelektrode 2, 3 in einer weiteren Variante gezeigt. Wie bereits ausgeführt, ist der Begriff "Elektrode" im Kontext mit dieser Anmeldung nicht als homogenes, unpolares Bauteil beschränkt zu verstehen, die Elektrode gemäß dem erfindungsgemäßen Vorschlag ist flexibel ausgestaltet. In dem hier gezeigten Ausführungsbeispiel besteht die Elektrode 5, 7 aus zwei Elektrodenteilen 29, 29', die von einem Isolationsteil 30 getrennt, aber mechanisch verbunden sind.

Der Vorteil dieser Variante kommt in Fig. 15 zum Ausdruck. In Ansicht gesehen ist der Raum 22 von der Stirnseite 28, der Elektrode 5, der Oberelektrode 2 und der Stirnseite 28, der Elektrode 7, der Unterelektrode 3 umgeben. Sowohl die Elektrode 5 der Oberelektrode 2 wie auch die Elektrode 7 der Unterelektrode 3 bestehen je aus zwei Elektrodenteile 29a, 29'a für die Elektrode 5 der Oberelektrode 2, Elektrodenteil 29b, 29'b der Elektrode 7 der Unterelektrode 3. Zwischen den Elektrodenteilen 29a, 29'a befindet sich das Isolationsteil 30a, zwischen dem Elektrodenteil 29b, 29'b befindet sich das Isolationsteil 30b. Nun ist es möglich, die jeweiligen Elektrodenteile 29a, 29'a bzw. 29b, 29'b in unterschiedlicher Weise mit Spannungen zu beaufschlagen und somit auch die Stromrichtung des Verschweißungsstromes zu steuern. So ist es z.B. möglich, die einander gegenüberliegenden (bezogen auf die jeweiligen Stirnseiten) Elektrodenteile 29a/29'b oder 29'a/29b für den Verschweißungsvorgang zu verwenden und die jeweils nicht verwendeten Elektrodenteile isoliert zu halten. Durch eine geschickte Verschaltung ist es möglich, so auch den Elektrodenverbrauch zu steuern. Diese so beschriebene Anordnung hat den Vorteil, dass der Verschweißungsstrom zu einer möglichst homogenen Stromdichte in dem kompaktierten Litzenbündel führt. Es ist aber auch möglich, bei entsprechender Verschaltung der einzelnen Elektroteile bzw. Elektrodenteilbereiche 29a, 29'a, 29b, 29'b andere Stromläufe des Verschweißungsstromes in dem in den Raum 22 eingelegten Litzenbündel zu erzeugen.

In Fig. 14 ist wiederum angedeutet, dass die Elektroden zueinander beabstandet sind derart, dass die Elektroden von Ober- und Unterelektrode 2, 3 ineinander einzutauchen vermögen.

In Fig. 11 ist angedeutet, dass die Stirnseite 28 aus zwei Stirnseitenkanten 33a, 33b besteht, die zueinander einen spitzen, rechten oder stumpfen Kantenwinkel β einschließen. Es bildet sich so eine trichterförmige oder dachförmige Kantenstruktur aus, die insbesondere mit der nur einen Bewegungsachse für die Relativbewegung 4 beim Kompaktieren des Litzenbündels erhebliche Vorteile eröffnet. Resultiert wird dies dadurch, dass die Stirnseitenkanten 33a, 33b mit der Bewegungsrichtung 4 einen spitzen Bewegungswinkel γ (vgl. Fig. 13) einschließen. An dieser Stelle sei bemerkt, dass diese vorteilhafte Ausgestaltung der Stirnseite 28 auf die in Fig. 11 und 13 beschriebene spezielle Ausgestaltung der Elektrode nicht beschränkt ist, sondern natürlich in gleicher Weise auf die Ausgestaltung der Elektrode nach Fig. 1, 7 oder 16, 17 übertragbar ist.

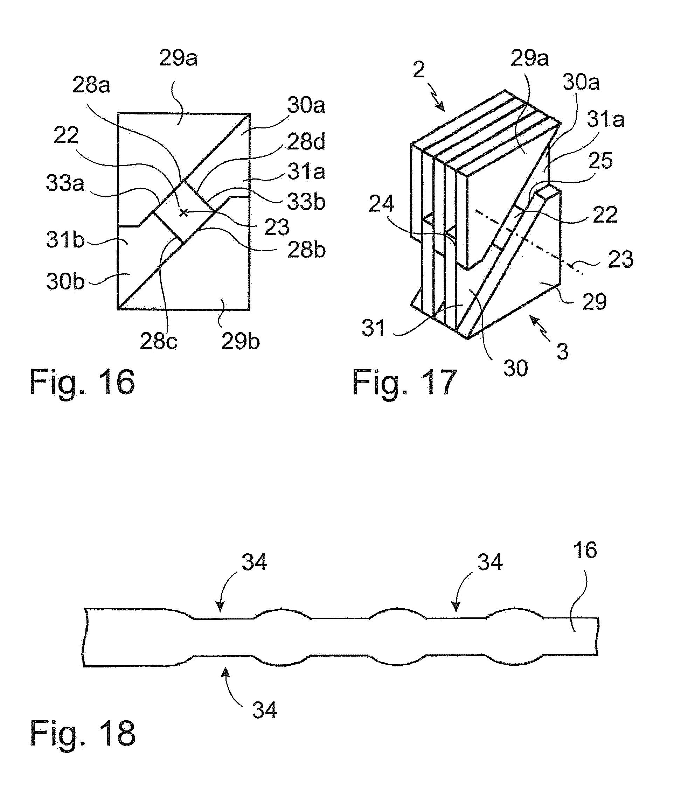

Der Vorschlag nach Fig. 16, 17 ist wie folgt aufgebaut. Die Elektroden 5, 7 der Ober- 2 oder Unterelektrode 3 sind wiederum gleichartig realisiert, wobei in Richtung der Raumlängsachse 23 sich das Isolationsteil 30 hinter dem Elektrodenteil 29 anschließt. Des Weiteren ist vorgesehen, dass das Elektrodenteil 29 nicht deckungsgleich ist zu dem Isolationsteil 30, sondern an dem Isolationsteil 30 ein vorragender Isolationsabschnitt 31 vorgesehen ist. Die Ausgestaltung für die Elektroden der Unterelektrode 3 und Oberelektrode 2 sind identisch, wobei das Elektrodenteil 29a aus einer Rückseite das Isolationsteil 30a mit dem vorragenden oder vorspringenden Isolationsabschnitt 31a besitzt.

In Fig. 16 ist in Richtung der Raumlängsachse 23 gesehen die Situation weiter beschrieben. Rechtwinklig zur Raumlängsachse 23, somit auch zur Längserstreckung der Litzen 16 liegen die im Verschweißungsstrom führenden Elektrodenteile 29a, 29b einander gerade gegenüber und durchdringen den kompaktierten Litzenbereich rechtwinklig, was zu einer ringartigen Einschnürung 34 im Kompaktierungsbild nach Fig. 18 führt. Der Vorteil dieser Ausgestaltung liegt darin, dass die den Strom führenden Elektrodenteile 29a, 29b einander nicht berühren und auch nicht in Berührungsnähe gelangen, da die jeweils vorragenden Isolationsabschnitte 31a, 31b in die zwischen den Elektrodenteilen bzw. Elektroden der Ober- und Unterelektrode 2, 3 vorgesehenen Ausnehmungen eintauchen. Natürlich ist zwischen den einzelnen Elementen wiederum ein Bewegungsspalt 24 vorgesehen, dessen Spaltlängserstreckung 25 hier z.B. mit der dem Raum zugewandten Stirnseite 28 zusammenfällt und rechtwinklig zur Raumlängsachse 23 verläuft.

In Fig. 10 ist die Form der mit den Veränderungen nach Fig. 1, 2 verschweißten Litzen zu erkennen, die Einschnürungen 34 oder der Verbindungsbereich sind in Längserstreckung einseitig versetzt.

In Fig. 15 wurde bereits eine Variante vorgeschlagen, die ein homogenes Fließen des Stromes durch das gesamte kompaktierte Litzenbündel erlaubt. Eine ähnliche homogene Stromverteilung ist auch nach der Variante nach Fig. 16 möglich, da der Strom z.B. an der Stirnseite 28a des den Strom leitenden Elektrodenteils 29a in das kompaktierten Litzenbündel eintritt und auf der gegenüberliegenden, parallel verlaufenden Stirnseite 28b des Elektrodenteiles 29b der Unterelektrode wieder verlässt. Die den Raum 22 weiterhin begrenzenden Stirnseiten 28c und 28d gehören zu den Isolationsteilen 30a, 30b, genau genommen grenzen sie deren vorragende Isolationsabschnitte 31a, 31b gegenüber dem Raum 22 ab.

Die jetzt mit der Anmeldung und später eingereichten Ansprüche sind ohne Präjudiz für die Erzielung weitergehenden Schutzes. Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinanderkombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Vorrichtung zum Kompaktieren und Verbinden elektrischer Leiter (16), insbesondere von Litzen oder dergleichen, wobei die Vorrichtung (1) eine Oberelektrode (2) und eine Unterelektrode (3) aufweist, die sich gegenüberliegen und entlang einer Bewegungsrichtung (4) relativ zu und voneinander weg bewegbar sind, die Ober- (2) bzw. Unterelektrode (3) je mindestens eine Elektrode (5, 7) aufweist, die Elektroden (5, 7) einen Raum (22) zur Aufnahme der zu kompaktierenden und zu verbindenden Leiter (16) begrenzen, der Raum (22) eine Raumlängsachse (23) aufweist, die, falls Leiter (16) in dem Raum (22) eingelegt sind, im wesentlichen parallel ist zu der Längserstreckung der Leiter (16), wobei die Größe des Raumes (22) von der relativen Lage von Oberelektrode (2) zu Unterelektrode (3) abhängt, und zwischen der mindestens einen Elektrode (5) der Oberelektrode (2) und der mindestens einen Elektrode (7) der Unterelektrode (3) ein Bewegungsspalt (24) mit einer Spaltlängserstreckung (25) vorgesehen ist und die Spaltlängserstreckung (25) und die Raumlängsachse (23) einen spitzen, rechtwinkligen, oder stumpfen Winkel (α) einschließt.

2. Vorrichtung nach Anspruch 1, **dadurch gekennzeichnet, dass** der Winkel zwischen 15° und 165°, bevorzugt zwischen 45° und 135°, insbesondere zwischen 60° und 120°, insbesondere bevorzugt zwischen 75° und 105° beträgt.

3. Vorrichtung nach einem der vorhergehenden Ansprüche, **dadurch gekennzeichnet, dass** die Oberelektrode (2) und die Unterelektrode (3) jeweils quer zur Bewegungsrichtung (4) nebeneinender angeordnete und voneinander beabstandete Elektroden (5) bzw. (7) aufweisen und/oder die Elektroden (5) der Oberelektrode (2) und die Elektroden (7) der Unterelektrode (3) quer zur Bewegungsrichtung gegeneinander versetzt sind, derart, dass sie ineinander eingreifen, wenn die Oberelektrode (2) und die Unterelektrode (3) aufeinander zu bewegt sind, wobei insbesondere bevorzugt die Elektroden (5, 7) von Ober- (2) bzw. Unterelektrode (3) voneinander beabstandet sind oder zwischen den Elektroden (5, 7) Abstandshalter (18, 19) angeordnet sind.

4. Vorrichtung nach einem der vorhergehenden Ansprüche, **dadurch gekennzeichnet, dass** die Elektroden (5) der Oberelektrode (2) jeweils Ausnehmungen (9) und die Elektroden (7) der Unterelektrode (3) jeweils Ausnehmungen (10) aufweisen, derart, dass in der ersten, geöffneten bzw. zurückbewegten Position von Oberelektrode (2) zur Unterelektrode (3) Leiter (16) quer zur Bewegungsrichtung in die Ausnehmungen (5) der Oberelektrode (2) und die Ausnehmung (9) der Unterelektrode (3) einschiebbar sind und dass in der geschlossenen bzw. aufeinander zu bewegten Position von Oberelektrode (2) zur Unterelektrode (3) die Elektroden (5) der Oberelektrode (2) und die Elektroden (7) der Unterelektrode (3) derart aufeinander zu bewegt sind, dass die in die in der ersten Position eingelegten Leiter (16) beim Bewegen der Oberelektrode (2) und der Unterelektrode (3) in die zweite Position in dem sich verkleinernden Raum zwischen den Ausnehmungen (9) der Elektroden (5) der Oberelektrode (2) und den Ausnehmungen (10) der Elektrode (7) der Unterelektroden (3) zusammengedrückt und kompaktiert werden, insbesondere sich je zwischen den Elektroden (5, 7) von Oberelektrode (2) und Unterelektrode (3) je ein Bewegungsspalt (24) befindet.

5. Vorrichtung nach einem der vorhergehenden Ansprüche, **dadurch gekennzeichnet, dass** die Elektroden (5, 7) der Ober-(2) bzw. Unterelektrode (3) lamellenartig ausgebildet sind, wobei bevorzugt die Elektroden (5, 7) der Ober- (2) bzw. Unterelektrode (3) untereinander gleichartig oder identisch ausgebildet sind, insbesondere die Elektrode (5, 7) auf der Vorder- (26) bzw. Rückseite (27) eine Begrenzungsfläche aufweist und eine, Vorder- (26) und Rückseite (27) verbindende Stirnseite (28) dem Raum (22) zugewandt ist.

6. Vorrichtung nach einem der vorhergehenden Ansprüche, **dadurch gekennzeichnet, dass** die Elektrode (5, 7) zumindest einen aus leitfähigem Material bestehenden Elektrodenteil (29, 29'), sowie zumindest einem aus isolierenden Material bestehenden Isolationsteil (30) aufweist und/oder der Isolationsteil (30), zum Beispiel als Beschichtung auf der Begrenzungsfläche (26, 27) oder als separater, mit dem Elektrodenteil (29) verbundener, Abstand und/oder die Begrenzungsfläche (26, 27) bildendes Element ausgebildet ist, insbesondere die Elektrode (5, 7) mehrere, je durch ein Isolationsteil (30) getrennte Elektrodenteile (29, 29') aufweist, insbesondere bevorzugt unterschiedliche Elektrodenteile (29, 29') jeweils auf gleichem oder unterschiedlichem Spannungspotential liegen.

7. Vorrichtung nach einem der vorhergehenden Ansprüche, **dadurch gekennzeichnet, dass** die Elektrode (5, 7) zu einer Symmetrieachse symmetrisch ausgebildet ist und die Symmetrieachse zur Bewegungsrichtung (4) parallel ist und/oder die Elektrodenteile (29, 29') von Ober- (2) oder Unterelektrode (3) quer zur Bewegungsrichtung (4) gegeneinander versetzt sind, derart, dass die Elektrodenteile (29, 29') zwischen Isolationsteile (30) der Unter- (3) bzw. Oberelektroden (2) eingreifen, wenn sich die Oberelektrode (2) und die Unterelektrode (3) relativ aufeinander zu bewegen.

8. Vorrichtung nach einem der vorhergehenden Ansprüche, **dadurch gekennzeichnet, dass** das Isolationsteil (30) der Elektrode (5, 7) zumindest einseitig, bezogen auf die Bewegungsrichtung (4), gegenüber dem Elektrodenteil (29, 29') einen vorragenden Isolationsabschnitt (3') bildet und/oder der vorragende Isolationsabschnitt (30) der Elektrode (5, 7) einer Oberelektrode (2) bzw. Unterelektrode (3) zwischen die Elektrodenteile (29) benachbarter Elektroden (7, 5) der Unterelektrode (3) bzw. Oberelektrode (2) eingreift, wenn sich die Oberelektrode (2) und die Unterelektrode (3) relativ aufeinander zu bewegen.

9. Vorrichtung nach einem der vorhergehenden Ansprüche, **dadurch gekennzeichnet, dass** der Raum (22), der zur Aufnahme der Leiter (16) dient, sowohl von Isolationsteil (30) wie auch vom Elektrodenteil (29) der Elektroden (5, 7) begrenzt ist, bevorzugt der Isolationsteil (30) und Elektrodenteil (29) der Elektroden (5, 7) von Oberelektrode (2) und Unterelektrode (3) in Bewegungsrichtung (4) gesehen einander gegenüberstehen.

10. Vorrichtung nach einem der vorhergehenden Ansprüche, **dadurch gekennzeichnet, dass** die Elektroden (5) der Oberelektrode (2) und Elektroden (7) der Unterelektrode (3) im Bereich des Bewegungsspaltes (24) durch einen isolierenden Luftspalt getrennt sind und/oder zumindest eine Elektrode (5, 7) im Bereich der Stirnseite (28) derart scharfkantig ausgebildet ist, womit die Lackisolationsschicht eines Leiters verletzbar ist, wobei bevorzugt die Elektrode (5, 7) von Ober- (2) bzw. Unterelektrode (3) als Stapel von im wesentlichen gleichartigen Elektroden (5, 7), gegebenenfalls durch zwischengelegte Distanz- oder Abstandshalter (18, 19) vorhaltbar ist, der komplett im Umrüstfall auf Haltedorne oder Halteschrauben (32) des Halteteiles aufschiebbar ist, wozu die Elektrode gegebenenfalls mit Distanz- oder Abstandshaltern kommunizierenden Öffnungen ausgestattet ist und die Öffnungen mit dem Haltedorn bzw. der Halteschraube zusammenwirken.

11. Vorrichtung nach einem der vorhergehenden Ansprüche, **dadurch gekennzeichnet, dass** die Elektrode (5, 7) mindestens zwei Stirnseitenkanten (33a, 33b) aufweist, die zueinander einen spitzen, rechten oder stumpfen Kantenwinkel (β) einschließen und die Stirnseitenkanten (33a, 33b) mit der Bewegungsrichtung (4) je einen spitzen Bewegungswinkel (γ) einschließen und/oder die Ausnehmungen (9) der Elektroden (5) der Oberelektrode (2) und die Ausnehmungen (10) der Elektroden (7) der Unterelektrode (3) jeweils prismenförmig ausgebildet sind, wobei sich die im weitesten in die Elektroden (5) der Oberelektrode (2) bzw. in die Elektroden (7) der Unterelektrode (3) eingreifenden Spitzen (11) bzw. (12) der gebildeten Dreiecke vorzugsweise in der Bewegungsrichtung gegenüberliegen, bevorzugt die Ausnehmungen (9) der Elektroden (5) der Oberelektrode (2) und die Ausnehmungen (10) der Elektroden (7) der Oberelektrode (3) jeweils gebogen, halbrund oder rechteckig ausgebildet sind.

12. Vorrichtung nach einem der vorhergehenden Ansprüche, **dadurch gekennzeichnet, dass** die Elektroden (5) der Oberelektrode (2) und die Elektroden (7) der Unterelektrode (3) jeweils aus einem Metallmaterial, vorzugsweise aus einem Wolfram-Lanthan-Elektrodenmaterial oder einem WolframKupfer-Elektroden-Material gebildet sind, wobei bevorzugt als isolierendes Material Keramik vorgesehen ist und/oder die Elektroden (5) der Oberelektrode (2) und die Elektroden (7) der Unterelektrode (3) jeweils sich gegenüberliegende Aussparungen (21) aufweisen, durch die nach dem Einsetzen der Elektroden (5) in das obere Halteteil und der Elektroden (7) in des untere Halteteil (8) Führungsstäbe verlaufen, die in dem oberen Halteteil (6) bzw. in dem unteren Halteteil (8) angeordnet sind.

13. Vorrichtung nach einem der vorhergehenden Ansprüche, **dadurch gekennzeichnet, dass** zwischen jeweils zwei benachbarte Elektroden (5) der Oberelektrode (2) und zwischen jeweils zwei benachbarte Elektroden (7) der Unterelektrode (3) Abstandsteile (18, 19) eingesetzt sind, die sich gegenüberlieqende Aussparungen (21) besitzen, in die die Führungsstäbe eingreifen, bevorzugt die Abstandsteile (18, 19) leitfähige Werkstoffe umfassen.

14. Vorrichtung nach einem der vorhergehenden Ansprüche, **dadurch gekennzeichnet, dass** die Vorrichtung einen Bewegungsantrieb für die Relativbewegung von Oberelektrode (2) und Unterelektrode (3), insbesondere ein von einer Maschinensteuerung steuerbarer Bewegungsantrieb aufweist und die Maschinensteuerung auch auf die Stromquelle (I) wirkt, deren Anschlüsse (20) mit den Elektroden (5, 7) bzw. Elektrodenteilen (29, 29') von Oberelektrode (2) bzw. Unterelektrode (3) verbunden ist.

15. Vorrichtung nach einem der vorhergehenden Ansprüche, **dadurch gekennzeichnet, dass** für die Relativbewegung (4) von Oberelektrode (2) und Unterelektrode (3) und zurück nur die Oberelektrode (2) oder nur die Unterelektrode (3) bewegt wird und die Unterelektrode (3) bzw. Oberelektrode (2) feststeht oder sowohl Oberelektrode (2) wie auch Unterelektrode (3) bewegt werden.
